(19) Europäisches Patentamt / European Patent Office / Office européen des brevets

(11) **EP 4 383 498 A1**

(12) **EUROPEAN PATENT APPLICATION**

(43) Date of publication:
**12.06.2024 Bulletin 2024/24**

(51) International Patent Classification (IPC):
*H02J 3/00* (2006.01)

(21) Application number: **22211594.1**

(52) Cooperative Patent Classification (CPC):
**H02J 3/003; H02J 3/004;** H02J 2203/20

(22) Date of filing: **06.12.2022**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **CSEM Centre Suisse d'Electronique et de Microtechnique SA - Recherche et Développement
2002 Neuchâtel (CH)**

(72) Inventors:
- **CARRILLO RANGEL, Rafael Eduardo
1020 Renens (CH)**
- **SCHUBNEL, Baptiste
3098 Schliern bei Köniz (CH)**
- **SIMEUNOVIC, Jelena
3012 Berne (CH)**
- **ALET, Pierre-Jean
2000 Neuchâtel (CH)**

(74) Representative: **e-Patent SA
Rue Saint-Maurice 12
Case postale
2001 Neuchâtel 1 (CH)**

(54) **METHOD OF FORECASTING POWER PRODUCTION/CONSUMPTION IN A DISTRIBUTED NETWORK**

(57)    Method of forecasting weather-dependent power resource production and/or consumption in a distributed power system (1) comprising a time-varying plurality $N_k$ of first nodes (3) at least some of which comprise of power resources adapted to produce and/or to consume power and which each comprise a sensor $S_1, S_2, ..., S_{N_k}$ adapted to obtain direct or indirect measurements $v_1, v_2, ..., v_{N_k}$ of insolation and/or temperature, at a plurality of past timesteps M, said method comprising the steps of :
- obtaining past measurements $v_1, v_2, ..., v_{N_k}$ from said sensors $S_1, S_2, ..., S_{N_k}$ over time at times k,
- concatenating said past measurements $v_1, v_2, ..., v_{N_k}$ into a sequence of signal matrices

$$\{X(k)\}_{k=t-M}^{t-1}$$

;
- defining an intermediate network

$$\mathcal{G}_1$$

with a fixed number of second nodes with a number less than that of said plurality $N_k$ of first nodes (3);
- mapping said past measurements $v_1, v_2, ..., v_{N_k}$ from said sequence of signal matrices

$$\{X(k)\}_{k=t-M}^{t-1}$$

onto said intermediate network

$$\mathcal{G}_1$$

at each time *k* and carrying out feature extraction so as to obtain an intermediate sequence of matrices

$$\{\hat{X}(k)\}_{k=t-M}^{t-1}$$

of extracted features ;
- taking said sequence of matrices

$$\{\hat{X}(k)\}_{k=t-M}^{t-1}$$

of extracted features and using a graph-based model to forecast desired signals

$$\{y(k) \in \mathbb{R}^N\}_{k=t}^{t+H-1}$$

on an output network

$$\mathcal{G}_2$$

with a fixed number of third nodes *N*;
- interpolating said forecast desired signals so as to obtain forecasts of power resource production and/or consumption

$$\{\hat{\mathbf{y}}(k) \in \mathbb{R}^Q\}_{k=t}^{t+H-1}$$

at at least one point of interest at at least one future point in time, where Q is the number of points of interest and H is the number of time steps in the future.

Figure 2

**Description**

**Technical field**

The present invention relates to the field of distributed power networks. More particularly, it relates to a method of forecasting power production and/or consumption in a distributed power production and/or consumption network.

**State of the Art**

As the percentage of decentralized renewable energy sources increases in an electricity distribution grid, the challenges to grid operators increases, particularly in respect of forecasting of the renewable energy production so as to be able to anticipate the usage of dispatchable energy sources such as conventional gas, coal, nuclear and hydroelectric production resources and thereby to keep the grid balanced.

Typical state of the art approaches for renewable energy source production forecasting combine numerical weather predictions, satellite images and ground measurements with physical or machine learning models. However, such approaches tend to have low spatial and/or temporal resolution of the input data and thus of the resulting forecasts.

Current approaches involve data from a fixed network of sensors (each sensor being situated at a node), and hence are only useful for producing forecasts of power production and/or consumption at the nodes, with basic interpolation producing low quality forecasts at other locations. In addition, when new nodes are introduced into the dataset (such as new rooftop photovoltaic systems), the entire forecasting calculation must be redone. Documents US10425649 and CN114154558 describe examples of such fixed network forecasting system which are subject to these drawbacks.

The aim of the present invention is hence to at least partially overcome the above-mentioned drawbacks of the prior art.

**Summary of the invention**

More precisely, the invention relates to a method of forecasting weather-dependent power resource production and/or consumption, as defined in independent claim 1.

This method can be carried out on a processing unit such as a general purpose computer and relates to a distributed power system comprising a time-varying plurality $N_k$ of first nodes at least some of which comprise of power resources adapted to produce and/or to consume power and which each comprise a sensor $S_1, S_2, ... S_{N_k}$ adapted to obtain direct or indirect measurements $v_1, v_2, ..., v_{N_k}$ of insolation and/or temperature at a plurality of timesteps $M$. Direct measurements can, for instance, be obtained from a weather station, whereas indirect measurements can be inferred from consumption of heating, lighting or cooling power of a building.

The method of the invention comprises steps of:

- obtaining past measurements $v_1, v_2, ..., v_{N_k}$ from said sensors $S_1, S_2, ... S_{N_k}$ over time at times $k$; subsequently

- concatenating said past measurements $v_1, v_2, ..., v_{N_k}$ into a sequence of signal matrices $\{X(k)\}_{k=t-M}^{t-1}$, where M is the number of past timesteps at which said direct or indirect measurements $v_1, v_2, ..., v_{N_k}$ were taken; subsequently

- defining an intermediate network $\mathcal{G}_1$ with a fixed number of second nodes with a number less than that of said plurality $N_k$ of first nodes, and said second nodes being a subset of said first nodes; subsequently

- mapping said past measurements $v_1, v_2, ..., v_{N_k}$ from said sequence of signal matrices $\{X(k)\}_{k=t-M}^{t-1}$ onto said intermediate network $\mathcal{G}_1$ at each time $k$ and carrying out feature extraction so as to obtain an intermediate sequence of matrices $\{\hat{X}(k)\}_{k=t-M}^{t-1}$ of extracted features, these features corresponding to characteristics of the data which provide useful information, in other words they are numerical values computed from the raw data which provide salient information about the data, and the feature extraction method can be chosen from known methods such as the Fourier transform of the raw signals, in which case the extracted features are frequency content of the signals, principal component analysis, in which case the features are the linear transformation of the raw data by the matrix of principal components, or, simply, the output of a neural network that is trained to learn the most salient information for a specific task; subsequently

- taking said sequence of matrices $\{\widehat{X}(k)\}_{k=t-M}^{t-1}$ of extracted features and using a graph-based model to forecast desired signals $\{y(k) \in \mathbb{R}^N\}_{k=t}^{t+H-1}$ on an output network $\mathcal{G}_2$ with a fixed number of third nodes $N$; subsequently

- interpolating said forecast desired signals so as to obtain forecasts of power resource production and/or consumption $\{\hat{y}(k) \in \mathbb{R}^Q\}_{k=t}^{t+H-1}$ at least one point of interest at at least one future point in time, where $Q$ is the number of points of interest and $H$ is the number of time steps in the future. This point of interest may or may not correspond to a third node in the third output network $\mathcal{G}_2$.

This method is robust to changes in the number of first nodes and the corresponding sensors, and does not need to be repeated in its entirety for every such change, or to make forecasts for new points of interest, i.e. for proposed new nodes. This significantly reduces the computing time and power required to carry it out compared to prior art methods.

Advantageously, during said step of concatenating said past measurements $v_1, v_2, ..., v_{N_k}$ into a sequence of signal matrices $\{X(k)\}_{k=t-M}^{t-1}$, said first nodes are grouped into a plurality of clusters in said intermediate network $\mathcal{G}_1$, said intermediate network $\mathcal{G}_1$ having a predefined number of nodes $C$, where typically $C < N_k$.

Advantageously, said dynamic feature extraction comprises:

- carrying out feature embedding for each matrix $X(k)$ and computing a fixed feature matrix $\widehat{X}(k) \in \mathbb{R}^{C \times F'}$, where $F'$ is the number of features extracted;

- stacking said matrices $\widehat{X}(k) \in \mathbb{R}^{C \times F'}$ into a sequence of matrices $\{\widehat{X}(k)\}_{k=t-M}^{t-1}$.

Advantageously, said sequence of matrices $\{\widehat{X}(k)\}_{k=t-M}^{t-1}$ is subjected to multilayer perceptron to generate said sequence of predicted variables of interest $\{y(k) \in \mathbb{R}^N\}$, $k = t, t + 1, ..., t + H$, at the fixed nodes of said output network $\mathcal{G}_2$.

Advantageously, exogeneous variables $\{r(k)\}$, $k = t, t + 1, ..., t + H$ are taken into account when generating said sequence of predicted variables of interest $\{y(k) \in \mathbb{R}^N\}$, $k = t, t + 1, ..., t + H$.

Advantageously, said at least one point of interest is not a node in the output network $\mathcal{G}_2$. This enables forecasting for a location not in any of the sets of nodes.

**Brief description of the Drawings**

Further details of the invention will become more apparent upon reading the detailed description, in reference to the figures in which:

- Figure 1 is a schematic representation of a distributed power system;
- Figure 2 is a schematic representation of the method according to the invention, in generic form;
- Figure 3 is a schematic representation of the steps of dynamic feature extraction in the second block B2 of figure 2;
- Figure 4 is a schematic representation of feature extraction, the forecast model and interpolation in blocks B2, B3 and B4 of figure 2.

**Embodiments of the Invention**

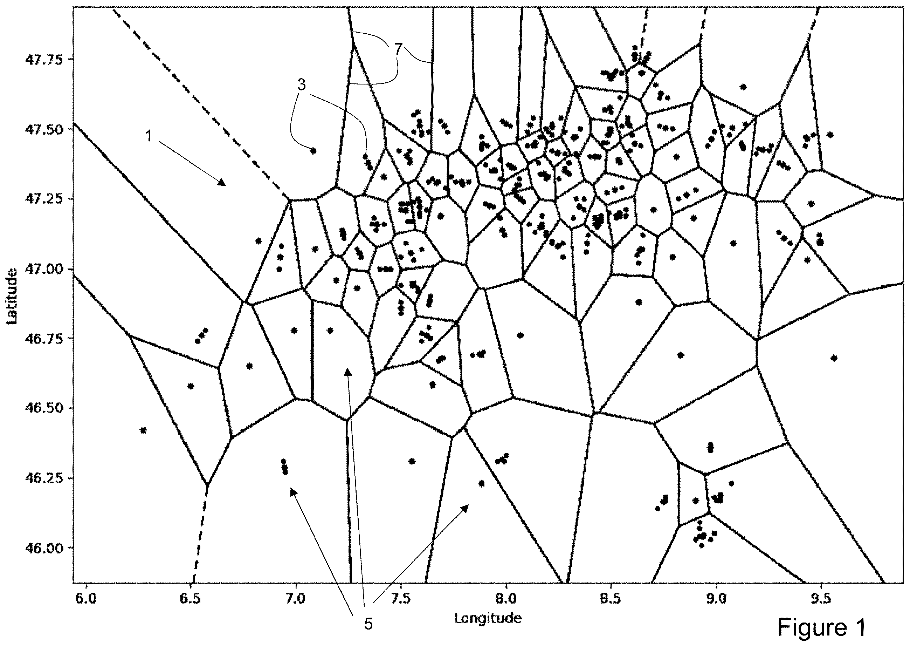

Figure 1 illustrates schematically a distributed power system 1 upon which the method according to the invention can be carried out.

The distributed power system 1 comprises a plurality of first nodes 3 (of which only a few have been indicated with a reference sign), at least some of which are linked with each other by a power distribution grid as is generally known.

At least some of said first nodes 3 comprise a power resource arranged to produce and/or consume power, for instance photovoltaic arrays or wind turbines for producing power, and residential, commercial or industrial buildings which consume power. Each first node 3 may have one or more power producing and/or power consuming entity associated with a sensor arranged to detect power generated or consumed.

Furthermore, some first nodes 3 may additionally comprise, or may simply be, a weather station comprising a sensor adapted to measure solar irradiance and/or ambient temperature and/or wind speed.

As a result, each of said first nodes 3 comprise or are associated with sensors $S_1$, $S_2$, ..., $S_{N_k}$ arranged to measure quantities which vary according to the weather, whether directly in the case of a weather station or indirectly in the case of power generation or consumption. In essence, the power generation or consumption observations provide indirect information on the underlying weather phenomena, with sufficient correlation to be exploitable in the present method. The sensors $S_1$, $S_2$, ..., $S_{N_k}$ can be considered as forming an input network.

The first nodes 3 can be divided into clusters 5 and local subgroups as indicated by dividing lines 7, and the location of each sensor is known in terms of at least its latitude and longitude. Its altitude can also be known.

The number of first nodes 3 is not fixed, and can vary as power resources or weather stations are added to or removed from the power distribution network 1, and this point is key to the invention: the method as described below is robust to such changes, and does not need to be repeated in its entirety for every change in the network 1 or to make forecasts for proposed new nodes 3. For instance, the model can be updated to take into account new input data without any significant changes to the model architecture and without the need to retrain the models every time a new node 3 needs to be taken into consideration.

A processing unit, which may for instance be a general-purpose computer, distributed cloud computing or similar, carries out the method described below.

The method of the invention uses graphs to model the spatio-temporal relations of the different signals in the system, that is to say weather station data, power generation or consumption data from various first nodes 3. A "graph" in this context is a mathematical model that is composed of a set of nodes 3 (or vertices) and a set of edges that describe the relationship between nodes 3. For example a weighted undirected graph can be defined as $\mathcal{G} =$ (V, $\varepsilon$, **A**), where $V = \{x_1, x_2, ..., x_N\}$ is the set of first nodes 3 and $\varepsilon$ is the set of edges (links). If nodes $x_i$ and $x$ are connected, the edge between them is denoted as $e_{ij} \in \varepsilon$. The topology of the network (graph) is determined by the adjacency matrix $A$ of size $N \times N$. The matrix element $A_{ij}$ gives the edge weight between first nodes $x_i$ and $x_j$ and is zero in the absence of an edge $e_{ij}$. In the case of the invention, each first node 3 represents a sensor, e.g. a power producing and/or consuming resource providing sensing data about power produced or consumed, or a weather station. The edges may represent the spatial proximity between stations or a learned relationship between them.

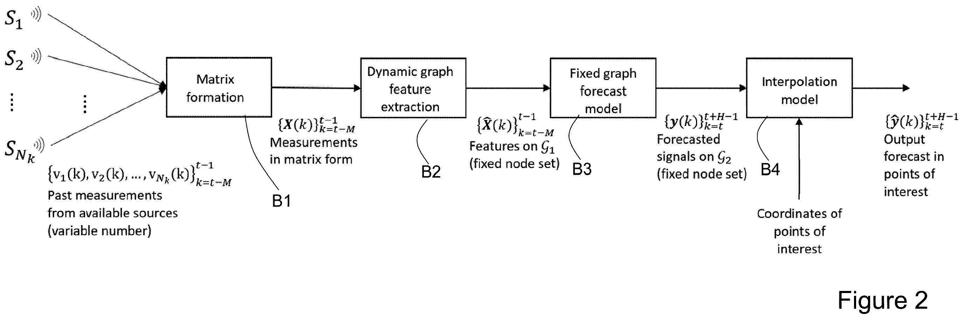

In the present invention, the number of first nodes $N_k$ in the network may vary at each discrete time $k$ due to a disconnection of some power generation or consumption for example. Let $\mathcal{G}^{(k)}$ denote the graph that models the sensor network at time $k$. The inputs to the method are the measurements $v_1(k)$, $v_2(k)$, ..., $v_{N_k}(k)$ (time-series signals) of the sensor network $S_1$, $S_2$, ..., $S_{N_k}$ for the past $M$ discrete time samples, i.e., $k = t - M, ..., t - 1$. The method of the invention outputs forecasts of the desired signals (e.g. power generation or irradiance) for $H$ time steps ahead, i.e. $k = t,..., t + H - 1$, in a set of points of interest (POI) defined by their geographical coordinates. The forecasting method is depicted in Figure 2 and it comprises four main blocks: the matrix formation block B1, the feature extraction block B2, the forecast block B3 and the interpolation block B4.

The first block B1 concatenates the measurement signals $v_i(k)$, $i = 1, ...,N_k$, into a matrix $X(k) \in \mathbb{R}^{N_k \times F}$, where $F$ is the number of measured variables that the sensor network takes, e.g. irradiance, power, temperature, etc. The $i$-th row of the matrix contains the measurements taken at time $k$ by node $i$. If a first node 3 only measures a subset of the said variables, then a NaN (not a number) symbol is placed in the corresponding columns of the missing measurements. The number of measured variables $F$ is fixed for all time steps. With this matrix representation, the input signals at time $k = t$ can be described by the sequence of matrices $\{X(k) \in \mathbb{R}^{N_k \times F}\}_{k=t-M}^{t-1}$.

The second block B2 is a graph feature extraction module that clusters the input nodes in $\mathcal{G}^{(k)}$ into a fixed intermediate network $\mathcal{G}_1$ with a predefined number of second nodes $C$, typically $C < N_k$. The second nodes $C$ are a subset of the first nodes 3. "Features" are characteristics of the data which provide useful information; in other words they are numerical values computed from the raw data which provide salient information about the data. The feature extraction block learns local node embeddings (features) for each node in the fixed intermediate network $\mathcal{G}_1$ based on the signals $\{X(k)\}_{k=t-M}^{t-1}$ ,on the basis of any convenient machine learning methodology. For instance, the feature extraction method can be chosen from known methods such as the Fourier transform of the raw signals, in which case the extracted features are frequency content of the signals, principal component analysis, in which case the features are the linear transformation of the raw data by the matrix of principal components, or, simply, the output of a neural network that is trained to learn the most salient information for a specific task. The dynamic graph feature extraction block B2 takes the matrix $X(k)$ and computes a fixed feature matrix $\widehat{X}(k) \in \mathbb{R}^{C \times F'}$ , where $F'$ is the number of features computed from the raw measurement signals $v_i(k)$, $i = 1, ..., N_k$, and which can be the same as $F$. The sequence $\{\widehat{X}(k)\}_{k=t-M}^{t-1}$ is the input for the next block B3. The local embeddings take into account the local topology, thus, they learn a low dimensional representation of the graph signals such that when nodes are removed or added the model can easily adapt to the new situation.

The third block B3 is a forecast module, takes the features $\{\widehat{X}(k)\}_{k=t-M}^{t-1}$ defined in the fixed intermediate network $\mathcal{G}_1$ and uses a graph-based model to forecast the desired signals $\{y(k) \in \mathbb{R}^N\}_{k=t}^{t+H-1}$ on an output network $\mathcal{G}_2$ with a fixed number of third nodes $N$. This output network $\mathcal{G}_2$ may be different from the intermediate network $\mathcal{G}_1$ with a denser network with more nodes in the region of interest (for instance where it may be desired to place a new node such as a new PV array), i.e. $N \geq C$. The forecast module produces forecasts of the desired signals for $H$ time steps ahead in time, i.e. for $k = t, t + 1,..., t + H - 1$. The forecast block can use any fixed graph forecast model, e.g. a linear autoregressive model, a graph convolutional transformer or a graph convolutional recurrent neural network to carry out the forecast. Indeed, any multidimensional time-series forecasting can be used.

The fourth block B4 is an interpolation module which takes as inputs the forecasted signals $\{y(k)\}_{k=t}^{t+H-1}$ from forecast module of third block B3 and the locations $Q$ of the desired nodes 3, i.e. the points of interest (POI). The interpolation module forecasts the desired signals in the POI. The interpolation block uses graph-based methods that take into account the local and global topology of the input and output networks to produce the final forecasts on the desired nodes.

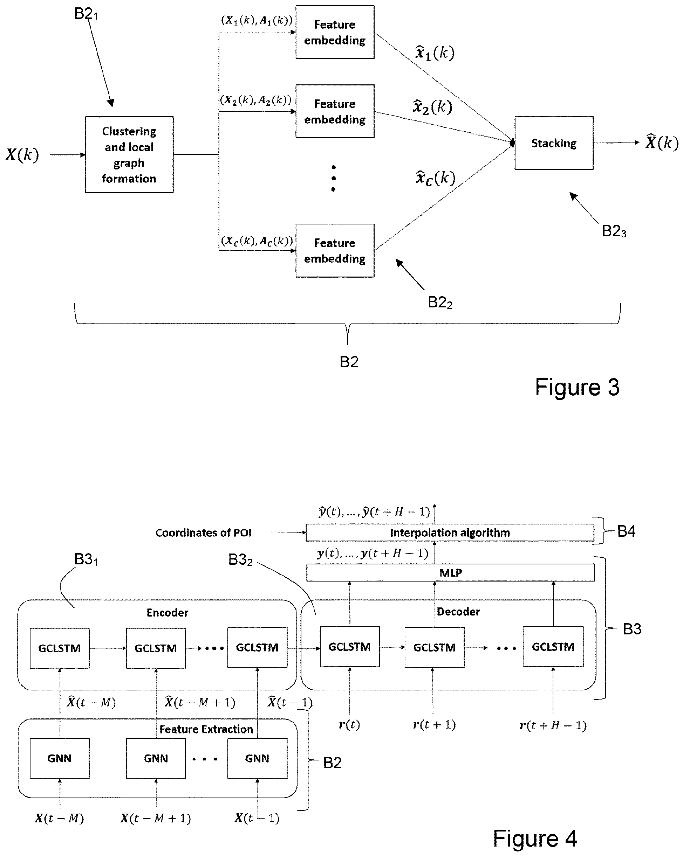

Figure 3 illustrates a particular implementation example of the second block B2.

The first sub-block $B2_1$ of block B2 clusters all nodes at time $k$ into $C$ clusters 5, whose centroids are predefined, and form the local feature matrices $X_i(k) \in \mathbb{R}^{N_{ik} \times F}$ , $i = 1, ..., C$, for each cluster 5 with $N_{ik}$ denoting the numbers of nodes belonging to cluster $i$ at time $k$. The first sub-block $B2_1$ also forms a local subgraph for each cluster by computing the matrices $A_i(k) \in \mathbb{R}^{N_{ik} \times N_{ik}}$ , $i = 1, ..., C$, denoting the adjacency matrix of the local subgraph in cluster $i$ at time $k$. The second sub-block $B1_2$ computes a local embedding vector $\widehat{x}_i(k) \in \mathbb{R}^{F'}$ as $\widehat{x}_i(k) = f(X_i(k), A_i(k))$ , where $f(\cdot)$ is a learnable function (independent of the number of nodes $N_{ik}$ in each cluster) that extracts the local features from all nodes 3 in the cluster. Examples of this function could be a weighted average, a graph attention network (see e.g. P. Velic̆kovic, G. Cucurull, A. Casanova, A. Romero, P. Lio, and Y. Bengio, 'Graph attention networks', International Conference on Learning Representations, 2018) or a self-attention graph pooling network (see e.g. J. Lee, I. Lee, and J. Kang, 'Self-Attention Graph Pooling', arXiv:1904.08082 [cs, stat], Jun. 2019, Accessed: Oct. 18, 2021. [Online]. Available: http://arxiv.org/abs/1904.08082). The third sub-block $B2_3$ stacks all vectors $\widehat{x}_i(k)$ into the fixed size matrix $X(k)$.

Figure 4 illustrates an implementation example of blocks B2, B3 and B4 of the method according to the invention. The input sequence $\{X(k)\}_{k=t-M}^{t-1}$ is obtained from the measurements $v_1(k), v_2(k), ..., v_{N_k}(k)$ of the sensor network at past times, as described above in. Observations can for instance be generated or consumed power or solar irradiance.

Second block B2 uses a generic graph neural network (GNN) to implement the clustering and feature embedding as described above in the context of figure 3.

The feature extraction block B2 uses generic GNNs as the functions to implement the clustering $B2_1$ and feature

aggregation B2$_2$ steps. In this implantation we assume that the C clusters and their centroids (fixed nodes in $\mathcal{G}_1$ )are defined beforehand (e.g., by using the k-means algorithm). The implementation steps of this block B1 are the following: For *k = t - M,..., t:*

1. Assign a cluster to each node in $\mathcal{G}^{(k)}$ ,

2. Form the local feature matrices {$\boldsymbol{X}_i(k)$}, *i* = 1, ..., *C,*

3. Form the local adjacency matrices {$\boldsymbol{A}_i(k)$}, *i* = 1, ..., *C,*

4. Compute $\boldsymbol{x}_i(k)$= *f(*$\boldsymbol{X}_i(k)$, $\boldsymbol{A}_i(k)$)),*i*=1,...,*C,*

5. Stack all $\boldsymbol{x}_i(k)$,,*i* = 1, ..., *C,* into the fixed size matrix $\boldsymbol{X}(k)$.

The local adjacency matrices $\boldsymbol{A}_i(k)$ can be constructed using the k nearest neighbours algorithm of using a fully connected graph based on a function of the distance between nodes. Let $\hat{A}_i$ be the normalized adjacency matrix of the local subgraph at cluster i, defined as $\hat{A}_i = \tilde{D}_i^{1/2}\tilde{A}_i\tilde{D}_i^{1/2}$, where $\tilde{A}_i = A_i + I_{N_{ik}}$ and $\tilde{D}_i$ is the degree matrix of $\tilde{A}_i$. Possible candidates for the feature aggregation function $f(\cdot)$ are:

A) Weighted average. The feature vector can be computed as $\widehat{x}_i(k) = z_i^T X_i(k)$ , where $z_i \in \mathbb{R}^{N_{ik}\times 1}$ is a vector of predefined weights, e.g.

$$z_i = \left[\frac{1}{N_{ik}}, ..., \frac{1}{N_{ik}}\right]^T.$$

B) Graph attention network (see reference above). The feature vector is computed by the following steps:

1. $\boldsymbol{z}_i(k)$ = softmax(A$_i$(k)$\boldsymbol{X}_i$(k)$\theta_i$)

2. $\widehat{x}_i(k) = \sigma(z_i^T(k)\ X_i(k)W_i)$

where $\boldsymbol{\theta}_i \in \mathbb{R}^{F\times 1}$ and $W_i \in \mathbb{R}^{F\times F_i}$ are learnable parameters, softmax($\cdot$) denotes the softmax function applied element-wise and $\sigma(\cdot)$ is a non-linear activation function, e.g., the rectified linear unit (ReLU) activation or the sigmoid function.

C) Self-attention graph pooling network (see reference above). A variation of SAGPool can be used to compute the feature vector with the following steps:

1. $\boldsymbol{z}_i(k)$=*tanh(*$\boldsymbol{A}_i(k)\boldsymbol{X}_i(k)\theta_i$)
2. $k_i$ = argmax($\boldsymbol{z}_i(k)$)
3. x$_i$(k) =[$\sigma$($\boldsymbol{A}_i(k)\boldsymbol{X}_i(k)\boldsymbol{W}_i$)]$_{k_i}$:

where $\boldsymbol{\theta}_i \in \mathbb{R}^{F\times 1}$ and $W_i \in \mathbb{R}^{F\times F'}$ are learnable parameters, tanh ($\cdot$) denotes the hyperbolic tangent function applied element-wise, argmax(.) denotes the arg max function over the elements of its input vector, $\sigma(\cdot)$ is a non-linear activation function, e.g., the ReLU activation or the sigmoid function, and, [$\boldsymbol{S}$]$_{k:}$ denotes the row vector formed by selecting the *k*-th row of $\boldsymbol{S}$.

Note that the learnable parameters in all of the aforementioned functions are independent of $N_{ik}$, i.e. are independent of the number of nodes at every cluster *i* and every time step *k*, thus independent of the number of input sensors at every time step.

The forecasting module of block B3 is composed of an encoder-decoder model to forecast the desired variables (power or irradiance) at the *N* fixed locations defined in $\mathcal{G}_2$ . Both the encoder B3$_1$ and decoder B3$_2$ combine recurrent neural networks and spectral graph convolution to model jointly the temporal and spatial correlations, specifically graph convolutional long-short term memory (GCLSTM) cells (see for instance J. Simeunovic, B. Schubnel, P.-J. Alet, and R.

E. Carrillo, 'Spatio-Temporal Graph Neural Networks for Multi-Site PV Power Forecasting', IEEE Transactions on Sustainable Energy, vol. 13, no. 2, pp. 1210-1220, 2022, doi: 10.1109/TSTE.2021.3125200). Classical LSTM cells are a type of neural networks aimed at modelling the non-linear temporal dynamics of a system, thus its model resembles a non-linear version of linear state space models. In the classical LSTM cell, the cell state vector, $c$(k), and the output vector, $h(k)$, are updated recursively from the input sequence $\{\hat{X}(k)\}$ using gating operations that involves only matrix-vector multiplications. In GCLSTM cells, $c(k)$, $h(k)$ and the gating operations are modified by replacing the matrix-vector multiplications with spectral graph convolutions. Let $Z = W * X$ denotes the graph convolution operation, then the $j$-th column of $Z$ is defined as

$$(W * X)^{(j)} = \sum_{k=1}^{K} \sum_{i=1}^{f_{in}} W_{kji} T_k(L) X^{(i)}, \qquad j = 1, \dots, f_{out},$$

where $f_{in}$ denotes the input number of features of matrix $X$, i.e. its number of columns, $f_{out}$ denotes the number output features from the graph convolution, i.e. the number of columns of $Z$, and, $X^{(i)}$ denotes the column vector formed by picking the $i$-th column of X. $L$ is the graph Laplacian matrix of the underlying graph, defined as $L = A - D$, with $D$ being the degree matrix of $A$, $T_k(\cdot)$ denotes the Chebyshev polynomial of order k applied to each entry of a matrix, $K$ denotes the order of the Chebyshev expansion, and, $W \in \mathbb{R}^{K \times f_{out} \times f_{in}}$ is a tensor of learnable parameters. Thus, for a given input sequence $\{\hat{X}(k)\}$ the GCLSTM cell equations are given by:

$$f(k) = \text{sig}\big(W_{f,h} * h(k-1) + W_{f,x} * \widehat{X}(k) + b_f\big),$$

$$i(k) = \text{sig}\big(W_{i,h} * h(k-1) + W_{i,x} * \widehat{X}(k) + b_i\big),$$

$$o(k) = \text{sig}\big(W_{o,h} * h(k-1) + W_{o,x} * \widehat{X}(k) + b_o\big),$$

$$c(k) = i(k)\odot\tanh\big(W_{c,h} * h(k-1) + W_{c,h} * \widehat{X}(k) + b_c\big) + f(k)\odot c(k-1),$$
$$h(k) = o(k)\odot\tanh\big(c(k)\big).$$

In the cell update equations sig($\cdot$) denotes the sigmoid function, $\odot$ denotes the Hadmard product and tanh ($\cdot$) denotes the hyperbolic tangent function. The weights $W_{.,.}$ and biases $b_{.}$ are learnable parameters whose dimensions are determined by the number of input and output features.

The encoder block $B3_1$ uses GCLSTM cells to estimate the "hidden" cell state of the system given the past sequence $\{\hat{X}(k)\}$, defined on fixed graph $\mathcal{G}_1$ with $C$ nodes. The encoder cell state is initialized with zeros. The decoder also uses GCLSTM cells that is initialized with the final encoder cell state and a multilayer perceptron (MLP) layer (multilayer perceptron methods are well known in the academic literature and hence do not need to be explained further here) to predict the variable of interest for the forecasting horizon, i.e. the sequence $\{y(k) \in \mathbb{R}^N\}$, $k = t, t+1, \dots, t+H$, at the fixed nodes in $\mathcal{G}_2$. The decoder also takes as input the exogenous variables $\{y(k)\}$, $k = t, t+1, \dots, t+H$. These exogenous variables can, for instance, be the time of day, the day of the year, the clear sky irradiance calculated at the fixed nodes in $\mathcal{G}_1$ in the forecasting horizon $k = t, t+1, \dots, t+H$. The clear sky irradiance can be computed with a deterministic equation knowing the position (latitude, longitude and altitude), and the time of the year. The adjacency matrices for the encoder and decoder are formed using the k nearest neighbours algorithm using the locations in $\mathcal{G}_1$ and $\mathcal{G}_2$, respectively.

The interpolation block B4 takes the sequence {y(k)} and the locations (latitude and longitude) of the one or more POI as inputs and computes the forecasts on the POI. Without loss of generality we can suppose that the POI are all different from the locations in the fixed output network $\mathcal{G}_2$. Suppose that the number of POI is $Q$. To compute the forecasted variables at the POI we form a graph $\mathcal{G}_T$ whose node set is the union of the node set of $\mathcal{G}_2$ and the POI. Thus the number of nodes in $\mathcal{G}_T$ is $N + Q$. Let $A_T \in \mathbb{R}^{(N+Q)\times(N+Q)}$ be the adjacency matrix associated to $\mathcal{G}_T$, e.g. using a k-nearest neighbour graph, and let $L_T$ be the associated graph Laplacian matrix defined as $L_T = D_T - A_T$, where $D_T$ is the degree matrix of $A_T$. Define $\nabla \in \mathbb{R}^{H\times(H-1)}$ as the discrete temporal difference operator, i.e. the first difference operator. Let $Y \in \mathbb{R}^{N\times H}$ denotes the matrix formed by stacking the vectors $\{y(k) \in \mathbb{R}^N\}$, into a matrix and let $\widetilde{Y} \in \mathbb{R}^{(N+Q)\times H}$ be the matrix formed by stacking the forecasted variables in the POI and the forecasts locations in $\mathcal{G}_2$ (i.e. $Y$ the known forecasts). Denote as $\Omega$ the set of row indexes of in $\tilde{Y}$ of the nodes in $\mathcal{G}_2$. The forecasted variables are computed using the following algorithm.

1. $\widetilde{Y}_\Omega = Y$, $\widetilde{Y}_{\Omega^c} = 0$, $0 < \mu < 1/\beta$
2. **While** convergence **do**:
3. $\widetilde{Y} = \widetilde{Y} - \mu L_T \widetilde{Y} \nabla \nabla^T$
4. $\widetilde{Y}_\Omega = Y$
5. End while

In the interpolation algorithm $\mu$ is a step size that controls the speed of the algorithm and $\beta$ is the maximum eigen value of the matrix $L \nabla \nabla^T$. The convergence criteria might a predefined number of iterations or until the solution doesn't change. The output forecasts $\{\widehat{y}(k) \in \mathbb{R}^Q\}_{k=t}^{t+H-1}$ on the $Q$ POI are extracted from $Y$ by selecting the rows in $\Omega^c$.

The same methodology can also be used to make predictions of power consumption at points of interest.

Although the invention has been described in terms of specific embodiments, variations thereto are possible without departing from the scope of the invention as defined by the appended claims.

**Claims**

1. Method of forecasting weather-dependent power resource production and/or consumption in a distributed power system (1) comprising a time-varying plurality $N_k$ of first nodes (3) at least some of which comprise of power resources adapted to produce and/or to consume power and which each comprise a sensor $S_1, S_2, ..., S_{N_k}$ adapted to obtain direct or indirect measurements $v_1, v_2, .., v_{N_k}$ of insolation and/or temperature, at a plurality of past timesteps $M$, said method comprising the steps of :

   - obtaining past measurements $v_1, v_2, ..., v_{N_k}$ from said sensors $S_1, S_2, ..., S_{N_k}$ over time at times $k$,

   - concatenating said past measurements $v_1, v_2, ..., v_{N_k}$ into a sequence of signal matrices $\{X(k)\}_{k=t-M}^{t-1}$;

   - defining an intermediate network $\mathcal{G}_1$ with a fixed number of second nodes with a number less than that of said plurality $N_k$ of first nodes (3), said second nodes being a subset of said first nodes (3);

   - mapping said past measurements $v_1, v_2, ..., v_{N_k}$ from said sequence of signal matrices $\{X(k)\}_{k=t-M}^{t-1}$ onto said intermediate network $\mathcal{G}_1$ at each time $k$ and carrying out feature extraction so as to obtain an intermediate sequence of matrices $\left\{\widehat{X}(k)\right\}_{k=t-M}^{t-1}$ of extracted features ;

- taking said sequence of matrices $\left\{\widehat{X}(k)\right\}_{k=t-M}^{t-1}$ of extracted features and using a graph-based model to forecast desired signals $\{y(k) \in \mathbb{R}^N\}_{k=t}^{t+H-1}$ on an output network $\mathcal{G}_2$ with a fixed number of third nodes $N$;
- interpolating said forecast desired signals so as to obtain forecasts of power resource production and/or consumption $\{\hat{y}(k) \in \mathbb{R}^Q\}_{k=t}^{t+H-1}$ at at least one point of interest at at least one future point in time, where $Q$ is the number of points of interest and $H$ is the number of time steps in the future.

2. Method according to claim 1, wherein, during said step of concatenating said past measurements $v_1$, $v_2$, ..., $v_{N_k}$ into a sequence of signal matrices $\{X(k)\}_{k=t-M}^{t-1}$ , said first nodes (3) are grouped into a plurality of clusters in said intermediate network $\mathcal{G}_1$ , said intermediate network $\mathcal{G}_1$ having a predefined number of second nodes $C$, where typically $C < N_k$.

3. Method according to claim 1 or 2, wherein said dynamic feature extraction comprises:

   - carrying out feature embedding for each matrix $X(k)$ and computing a fixed feature matrix $\widehat{X}(k) \in \mathbb{R}^{C \times F\prime}$ , where $F'$ is the number of features extracted;

   - stacking said matrices $\widehat{X}(k) \in \mathbb{R}^{C \times F\prime}$ into a sequence of matrices $\left\{\widehat{X}(k)\right\}_{k=t-M}^{t-1}$ .

4. Method according to claim 3, wherein said sequence of matrices $\left\{\widehat{X}(k)\right\}_{k=t-M}^{t-1}$ is subjected to multilayer perceptron to generate said sequence of predicted variables of interest $\{y(k) \in \mathbb{R}^N\}$ , $k = t, t + 1, ..., t + H,$ at the fixed third nodes of said output network $\mathcal{G}_2$ .

5. Method according to any preceding claim, wherein exogeneous variables $\{r(k)\}$, $k = t, t + 1, ...,t + H$ are taken into account when generating said sequence of predicted variables of interest $\{y(k) \in \mathbb{R}^N\}$ , $k = t, t + 1, ..., t + H.$

6. Method according to any preceding claim, wherein said at least one point of interest is not a third node in the output network $\mathcal{G}_2$ .

7. Computer program product comprising instructions which, when the program is executed by a computer, cause the computer to carry out the steps of the method of any preceding claim.

Figure 1

Figure 2

EP 4 383 498 A1

Figure 3

Figure 4

Europäisches
Patentamt
European
Patent Office
Office européen
des brevets

# EUROPEAN SEARCH REPORT

Application Number

EP 22 21 1594

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PRADO-RUJAS IGNACIO-IKER ET AL: "A Flexible and Robust Deep Learning-Based System for Solar Irradiance Forecasting", IEEE ACCESS, IEEE, USA, vol. 9, 14 January 2021 (2021-01-14), pages 12348-12361, XP011833648, DOI: 10.1109/ACCESS.2021.3051839 [retrieved on 2021-01-21] * pages 1-3,5-9 * | 1-7 | INV. H02J3/00 |
| A | ESCHENBACH ANNETTE ET AL: "Spatio-Temporal Resolution of Irradiance Samples in Machine Learning Approaches for Irradiance Forecasting", IEEE ACCESS, IEEE, USA, vol. 8, 12 March 2020 (2020-03-12), pages 51518-51531, XP011779563, DOI: 10.1109/ACCESS.2020.2980775 [retrieved on 2020-03-19] * abstract * | 1-7 | |
| A | JELENA SIMEUNOVI\'C ET AL: "Spatio-temporal graph neural networks for multi-site PV power forecasting", ARXIV.ORG, CORNELL UNIVERSITY LIBRARY, 201 OLIN LIBRARY CORNELL UNIVERSITY ITHACA, NY 14853, 1 November 2021 (2021-11-01), XP091089956, * pages 1-9 * | 1-7 | TECHNICAL FIELDS SEARCHED (IPC) H02J |
| A | Richard Headen Inman: "Solar forecasting review", MSc. Thesis in Engineering Sciences, 1 January 2012 (2012-01-01), XP055157531, Retrieved from the Internet: URL:https://escholarship.org/uc/item/7zv8s 0w9.pdf [retrieved on 2014-12-09] * pages XV-XVI * | 1-7 | |

The present search report has been drawn up for all claims

| Place of search | Date of completion of the search | Examiner |
|---|---|---|
| Munich | 17 April 2023 | Krasser, Bernhard |

## REFERENCES CITED IN THE DESCRIPTION

**Patent documents cited in the description**

- US 10425649 B

- CN 114154558

**Non-patent literature cited in the description**

- **P. VELIČKOVIĆ ; G. CUCURULL ; A. CASANOVA ; A. ROMERO ; P. LIO ; Y. BENGIO.** Graph attention networks. *International Conference on Learning Representations,* 2018
- **J. LEE ; I. LEE ; J. KANG.** Self-Attention Graph Pooling. *arXiv:1904.08082,* June 2019, http://arxiv.org/abs/1904.08082

- **J. SIMEUNOVIĆ ; B. SCHUBNEL ; P.-J. ALET ; R. E. CARRILLO.** Spatio-Temporal Graph Neural Networks for Multi-Site PV Power Forecasting. *IEEE Transactions on Sustainable Energy,* 2022, vol. 13 (2), 1210-1220